# EUROPEAN PATENT SPECIFICATION

(11) **EP 1 794 834 B1**
(45) Date of publication and mention of the grant of the patent: **28.09.2011**
(21) Application number: 05770324.1
(22) Date of filing: 09.08.2005
(51) Int. Cl.: H01M 10/0525, H01M 10/36, H01M 6/18, H01M 4/62, H01M 4/02

(54) **LITHIUM ION SECONDARY BATTERY AND A SOLID ELECTROLYTE THEREOF**
LITHIUMIONEN-SEKUNDÄRBATTERIE UND FESTELEKTROLYT DAFÜR
ACCUMULATEUR AU LITHIUM-ION ET ELECTROLYTE SOLIDE CORRESPONDANT

(30) Priority: 17.08.2004 JP 2004237519; 02.12.2004 JP 2004350173
(43) Date of publication of application: 13.06.2007
(73) Proprietor: KABUSHIKI KAISHA OHARA, Sagamihara-shi, Kanagawa 229-1186 (JP)
(72) Inventor: INDA, Yasushi, Kanagawa 229-1186 (JP)
(74) Representative: von Kreisler Selting Werner
(86) International application number: PCT/JP2005/014883
(87) International publication number: WO 2006/019064

(56) References cited:
- EP-A- 1 424 743
- EP-A1- 1 049 188
- EP-A2- 0 838 441
- EP-A2- 1 148 563
- EP-A2- 1 372 208
- WO-A2-2006/019064
- WO-A2-2006/019064

## Description

### Technical Field

This invention relates to a solid electrolyte suitable mainly for a lithium ion secondary battery and a lithium ion secondary battery comprising this solid electrolyte.

In the past, an electrolyte in which a micro-pored film called a separator is impregnated with non-aqueous electrolytic solution was generally used as an electrolyte for a lithium ion secondary battery. A lithium ion secondary battery (polymer battery) employing a polymer electrolyte composed of a polymer has recently attracted more attention than a battery employing such electrolyte using an electrolytic solution.

This polymer battery uses a gel type electrolyte in which a polymer is impregnated with a liquid electrolytic solution. Since the electrolytic solution is held in the polymer, the battery has the advantage that there is little possibility of leakage of the liquid and safety of the battery thereby is improved and, moreover, the battery has an improved degree of freedom in the shape which the battery can assume.

Since this type of polymer electrolyte has a lower lithium ion conductivity than the electrolytic solution type electrolyte, it has been attempted to reduce the thickness of this polymer electrolyte. In case, however, the thickness of the polymer electrolyte is reduced, its mechanical strength is also reduced with the result that the polymer electrolyte is damaged during manufacture thereof and its positive electrode and negative electrode are short-circuited.

Japanese Patent Application Laid-open Publication No. Hei 6-140052 has proposed a solid electrolyte which is made by adding an inorganic oxide such as alumina to an electrolyte to improve its mechanical strength. Such inorganic oxides include, in addition to alumina, silica and lithium aluminate.

Addition of an inorganic compound such as alumina in the electrolyte, however, causes the problem that lithium ion conductivity in the solid electrolyte is significantly reduced. Further, when charging and discharging are repeated in a lithium ion secondary battery having this solid electrolyte, the electrolyte reacts with the inorganic oxide resulting in a significant drop in the charging-discharging cycle characteristic of the lithium ion secondary battery.

Japanese Patent Application Laid-open Publication No. 2004-185862 proposes a lithium ion secondary battery made of a solid electrolyte in the form of a thin film comprising an ion conductive inorganic substance. In this publication, a slurry is prepared by dispersing lithium ion conductive inorganic substance powder together with a binder in a solvent, this slurry is coated directly on an electrode material of a positive electrode or a negative electrode, and then the solvent is dried and removed to provide a thin film solid electrolyte. In this method, however, it is almost impossible to treat the electrolyte by itself and a special battery manufacturing apparatus is required for commercial production of the electrolyte. Besides, assembly of the battery involves a drying process which requires a relatively long period of time and this reduces efficiency in the manufacture of the battery.

EP 1424743 A discloses a thin film complex electrolyte of a polymer imparted with lithium ion conductivity by addition of glass ceramic powder and lithium salt. There is only one type of polymer.

US 6245458 B1 is directed to a composite electrode comprising a composition which contains sulfur, polyaniline and an organic sulfite compound. A solid or semisolid polymer electrolyte can be added to the composite electrode and the polymer solid electrolyte is here made of ethylene oxide in which lithium salts such as LiClO₄ is dissolved. A binder, such as polyvinylidene fluoride, may be added to the composite electrode. In other words, polyvinylidene fluoride is added to the composite electrode merely as a binder which binds together fine particles of an organic sulfuric compound, polyaniline, sulfur and a solid electrolyte (i.e. polyethylene oxide in which lithium salt is dissolved).

EP 1049188 A2 discloses a complex electrolyte of a polymer in which lithium ion conductive glass ceramic powder is dispersed. The lithium ion conductivity is derived mainly from the organic electrolyte solution with which the polymer is impregnated and, therefore, danger, raising from the organic electrolytic solution, cannot be eliminated.

EP 0838441 A2 discloses a lithium ion conductive glass ceramic but no discussion is made here about combination of this glass ceramic with one or even several polymers.

EP 1148563 A2 discloses improvement of ion conductivity in an electrode by mixing of ceramic particles of e.g. Al₂O₃, SiO₂, ZrO₂, MgO and Na₂O in the electrode. Described is here an improvement in ion conductivity by virtue of ion dispersion capability by participation of porous surface of the ceramic particles.

It is, therefore, an object of the invention to remove the difficulty existing in the practical production of the above described solid electrolyte and the lithium ion secondary battery using this solid electrolyte because of the low lithium ion conductivity and provide a solid electrolyte which has a high battery capacity without containing an electrolytic solution, has an excellent charging-discharging cycle characteristic, is capable of being used stable for a long period of time, and is easy for manufacture and treatment in the commercial production. It is also an object of the invention to provide a lithium ion secondary battery employing this solid electrolyte.

In a solid electrolyte type battery which does not use an electrolytic solution, an electrolytic solution cannot be impregnated in the positive and negative electrodes to enhance lithium ion conduction in the positive and negative electrodes as in the prior art lithium ion battery using the electrolytic solution. It is, therefore, another object of the invention to impart the positive and negative electrodes with excellent lithium ion conductivity without impregnating the positive and negative electrodes with an electrolytic solution.

### Summary of the Invention

As a result of detailed studies and experiments about various electrolytes used for a lithium ion secondary battery, the inventor of the present invention has found, which has led to the present invention, that lithium ion conductivity which is significantly higher than that of the prior art polymer electrolyte can be obtained in a solid electrolyte containing no electrolytic solution by forming an inorganic substance powder comprising a lithium ion conductive crystal of a specific composition, particularly a lithium ion conductive glass-ceramic powder of a specific composition, together with a lithium ion conductive organic polymer of a specific structure to the solid electrolyte in the form of a sheet. The inventor has also found that, by providing a positive electrode and/or a negative electrode with the same inorganic substance and/or organic polymer, particularly the same glass-ceramic and/or organic polymer, improved output and capacity as well as an improved charging-discharging characteristic as compared with the prior art solid electrolyte type battery can be realized.

In this specification, a "glass-ceramic" is a material made of an amorphous solid and a crystal which can be provided by causing a crystal phase to precipitate in a glass phase by heat treating a glass. A glass-ceramic includes a material which is provided by phase transition of an entire glass phase to a crystal phase if there is substantially no pore between or in the crystal grain, i.e., degree of crystallinity is 100 mass %. Ceramics and sintered materials generally cannot avoid presence of pores and crystal grain boundary between and in crystal grains caused during the manufacturing process and, in this respect, ceramics and sintered materials can be distinguished from glass-ceramics. Particularly as to ion conductivity, ion conductivity of a ceramic or a sintered material is significantly lower than that of crystal grains contained therein because of existence of such pores and crystal grain boundary. In a glass-ceramic, drop in ion conductivity between crystal grains can be prevented by controlling the crystallization process and ion conductivity of the glass-ceramic which is substantially equivalent to that of the crystal grains can thereby be maintained.

As described above, since no pores or crystal grain boundary between and in crystal grains which impedes ion conduction is produced during the manufacturing process, a glass-ceramic has an excellent ion conductivity as compared with general ceramics and sintered materials.

Further, it has been found that a lithium ion conductive glass-ceramic of a specific construction has a very high ion conductivity with its lithium ion transport number being 1 and moreover is a very stable solid electrolyte in the atmosphere.

It has been found that, by providing this glass-ceramic or a composite material comprising this glass-ceramic in a positive electrode and/or a negative electrode, an excellent ion conductivity enhancing function can be imparted to the positive electrode and/or the negative electrode notwithstanding that the lithium ion secondary battery contains no electrolytic solution.

For achieving the objects of the invention, in the first aspect of the invention, there is provided a solid electrolyte according to claim 1.

In the second aspect of the invention, there is provided a solid electrolyte as defined in the first aspect wherein the inorganic substance which constitutes the powder of the inorganic substance comprising the lithium ion conductive crystal is free of pores or a crystal grain boundary which impedes ion conduction.

In the present specification, "pores or crystal grain boundary which impedes ion conduction" means ion conduction impeding elements such as pores and a crystal grain boundary which reduce ion conductivity of the entire inorganic substance including a lithium ion conductive crystal to one tenth or below of ion conductivity of the lithium ion conductive crystal in the inorganic substance.

In the third aspect of the invention, there is provided a solid electrolyte as defined in the first or second aspect having thickness exceeding 20µm up to 60µm.

In the fourth aspect of the invention, there is provided a solid electrolyte as defined in any of the first to the third aspects wherein the powder of the inorganic substance comprising the lithium ion conductive crystal has ion conductivity of 10⁻⁴Scm⁻¹ or over and an average particle diameter of 9 µm or below and is contained in the solid electrolyte in an amount of 50 - 95 mass %.

In the fifth aspect of the invention, there is provided a solid electrolyte as defined in any of the first to fourth aspects having ion conductivity of 10⁻⁵Scm⁻¹ or over.

In the sixth aspect of the invention, there is provided a solid electrolyte as defined in any of the first to fifth aspects wherein the powder of the inorganic substance comprising the lithium ion conductive crystal has, as a predominant crystal phase, a crystal phase of Li_{1+x+y}AlₓTi₂₋ₓSi_{y}P_{3-y}O₁₂ where x and y are 0≦x≦1 1 and 0≦y≦1.

In the seventh aspect of the invention, there is provided a solid electrolyte as defined in any of the first to sixth aspects wherein the powder of the inorganic substance comprising the lithium ion conductive crystal comprises, in mol %,

| | |
|---|---|
| Li₂O | 12-18% |
| Al₂O₃ + Ga₂O₃ | 5-10% |
| TiO₂ + GeO₂ | 35-45% |
| SiO₂ | 1-10% and |
| P₂O₅ | 30-40%. |

In the eighth aspect of the invention, there is provided a solid electrolyte as defined in any of the first to sixth aspects wherein the powder of the inorganic substance comprising the lithium ion conductive crystal comprises, in mass %,

| | |
|---|---|
| Li₂O | 3-10% |
| Al₂O₃ + Ga₂O₃ | 5-20% |
| TiO₂ + GeO₂ | 25-40% |
| SiO₂ | 0.5-8% and |
| P₂O₅ | 40-55%. |

In the ninth aspect of the invention, there is provided a solid electrolyte as defined in any of the first to eighth aspects wherein the polymer added with the inorganic or organic lithium salt has ion conductivity of 10⁻⁸Scm⁻¹ and is contained in the solid electrolyte in an amount of 5 - 40 mass %.

In the tenth aspect of the invention, there is provided a solid electrolyte as defined in any of the previous aspects of the invention wherein the organic substance is a lithium ion conductive glass-ceramic.

In the eleventh aspect of the invention, there is provided a lithium ion secondary battery comprising a solid electrolyte as defined in any of the previous aspects.

In the twelfth aspect of the invention, there is provided a lithium ion secondary battery as defined in the eleventh aspect comprising an inorganic substance comprising a lithium ion conductive crystal in a positive electrode and/or a negative electrode.

In the thirteenth aspect of the invention there is provided a lithium ion secondary battery as defined in the twelfth aspect wherein the inorganic substance comprising the lithium ion conductive crystal contained in the positive electrode and/or the negative electrode is free of pores or a crystal grain boundary which impedes ion conduction.

In the fourteenth aspect of the invention, there is provided a lithium ion secondary battery as defined in the twelfth or thirteenth aspect wherein the inorganic substance comprising the lithium ion conductive crystal contained in the positive electrode and/or the negative electrode is a lithium ion conductive glass-ceramic.

In the fifteenth aspect of the invention, there is provided a lithium ion secondary battery as defined in any of the twelfth to fourteenth aspect wherein the inorganic substance comprising the lithium ion conductive crystal contained in the positive electrode and/or the negative electrode has a particle diameter which is one-fifth or below of the particle diameter of an active material of the positive electrode and/or the negative electrode.

In the sixteenth aspect of the invention, there is provided a lithium ion secondary battery as defined in any of the twelfth to fifteenth aspects wherein the inorganic substance comprising the lithium ion conductive crystal contained in the positive electrode and/or the negative electrode is contained in an amount of 2 - 35 mass % of the active material of the positive electrode and/or the negative electrode comprising the inorganic substance.

In the seventeenth aspect of the invention, there is provided a lithium ion secondary battery as defined in any of the twelfth to sixteenth aspects wherein the inorganic substance contained in the positive electrode and/or the negative electrode comprising the lithium ion conductive crystal comprises, in mol %,

| | |
|---|---|
| Li₂O | 12 - 18% |
| Al₂O₃ + Ga₂O₃ | 5 - 10% |
| TiO₂ + GeO₂ | 35 - 45% |
| SiO₂ | 1 - 10% and |
| P₂O₅ | 30 - 40%. |

In the eighteenth aspect of the invention, there is provided a lithium ion secondary battery as defined in any of the twelfth to sixteenth aspects wherein the inorganic substance contained in the positive electrode and/or the negative electrode comprising the lithium ion conductive crystal comprises, in mass %,

| | |
|---|---|
| Li₂O | 3 - 10% |
| Al₂O₃ + Ga₂O₃ | 5 - 20% |
| TiO₂ + GeO₂ | 25 - 40% |
| SiO₂ | 0.5 - 8% and |
| P₂O₅ | 40 - 55%. |

In the nineteenth aspect of the invention, there is provided a lithium ion secondary battery as defined in any of the twelfth to eighteenth aspects wherein the inorganic substance contained in the positive electrode and/or the negative electrode comprising the lithium ion conductive crystal has, as a predominant crystal phase, a crystal phase of Li_{1+x+y}AlₓTi₂₋ₓSi_{y}P_{3-y}O₁₂ where x and y are 0≦x≦1 and 0≦y≦1.

In the twentieth aspect of the invention, there is provided a lithium ion secondary battery as defined in the eleventh aspect comprising, in the positive electrode and the negative electrode, the same glass-ceramic and organic polymer as those contained in the solid electrolyte.

According the present invention, a solid electrolyte which has a high lithium ion conductivity without containing an electrolytic solution and can be easily treated by itself can be provided, and a lithium ion secondary battery having a high battery capacity and high output and an excellent charging-discharging cycle characteristic can be provided. As compared with the prior art lithium ion secondary battery, the lithium ion secondly battery of the present invention does not contain an electrolytic solution and, therefor, there is no risk of leakage of liquid and combustion and a safe battery thereby can be provided. Further, since there is no likelihood of leakage of liquid and combustion, heat resisting temperature of the battery is improved and, therefore, it can be used in a high temperature environment without deterioration of its performance.

By using the inorganic substance or the glass-ceramic of the specific stricture of the present invention, a lithium ion secondary battery of a fully solid type can be provided which has excellent battery characteristics including a high heat resisting property which enables the battery to be used over a remarkably broad temperature range.

### Brief Description of the Drawings

In the accompanying drawings,
FIG. 1 is a schematic sectional view showing an internal structure of the lithium ion secondary battery of the present invention;
FIG. 2 is a graph showing change in the discharging capacity accompanying the charging-discharging cycles of the lithium ion secondary batteries of Example 3 and Comparative Example 3;
FIG. 3 is a graph showing change in the discharging capacity accompanying the charging-discharging cycles of the lithium ion secondary batteries of Example 4 and Comparative Example 4;
FIG. 4 is a graph showing change in the discharging capacity accompanying the charging-discharging cycles of the lithium ion secondary batteries of Example 5 and Example 6;
FIG. 5 is a graph showing change in the discharging capacity accompanying the charging-discharging cycles of the lithium ion secondary batteries of Example 7 and Example 8; and
FIG. 6 is a graph showing change in the discharging capacity accompanying the charging-discharging cycles of the lithium ion secondary batteries of Example 9 and Example 10.

### Description of Preferred Embodiments of the Invention

Preferred embodiments of the invention will now be described.

When a solid electrolyte of the present invention comprising an inorganic substance power comprising a lithium ion conductive crystal and a lithium ion conductive organic polymer, or a solid electrolyte of the present invention comprising a lithium ion conductive glass-ceramic powder and a lithium ion conductive organic polymer, is used as a battery, the thinner the solid electrolyte, the higher is the output of the battery because moving distance of lithium ion is shorter, and the higher is the capacity of the battery because a broader electrode area per unit volume can be secured. Therefore, the solid electrolyte comprising an inorganic substance power comprising a lithium ion conductive crystal and a lithium ion conductive organic polymer, or the solid electrolyte comprising a lithium ion conductive glass-ceramic powder and a lithium ion conductive organic polymer, should preferably have a thickness of 60 µm or below, more preferably 50 µm or below and, most preferably, 40 µm or below.

If, however, the solid electrolyte is excessively thin, mechanical strength of the solid electrolyte is reduced with the result that it becomes difficult to treat the solid electrolyte by itself during transport thereof and manufactured of the battery and this is not desirable in the commercial production of the battery. From this standpoint, therefore, the solid electrolyte should preferably have a thickness exceeding 20 µm, preferably 25 µm or over and, most preferably, exceeding 30 µm.

From the same standpoint, the solid electrolyte should preferably be formed in the form of a sheet having the above described thickness. By forming the solid electrolyte in the form of a sheet, treatment of the solid electrolyte only can be facilitated and it becomes possible to produce the solid electrolyte by itself previously and transport and supply this solid electrolyte as necessity arises for assembly of a battery whereby the battery can be manufactured in an efficient manner.

Mobility of lithium ion during charging and discharging of a lithium ion secondary battery depends upon lithium ion conductivity and the lithium ion transport number of the electrolyte. Accordingly, the degree of ion conductivity of the inorganic substance comprising a lithium ion conductive crystal of the invention or
ion conductivity of the lithium ion conductive glass-ceramic of the invention should preferably be 1 × 10⁻⁴S · cm⁻¹ or over, more preferably 5 × 10⁻⁴S · cm⁻¹ or over and, most preferably, 1 × 10⁻³S · cm⁻1 or over. The degree of ion conductivity of the solid electrolyte comprising the inorganic substance comprising a lithium ion conductive crystal or the lithium ion conductive glass-ceramic should preferably be 1 × 10⁻⁵S · cm⁻¹ or over, more preferably 5 × 10⁻⁵S · cm⁻¹ or over and, most preferably, 1 × 10⁻⁴S · cm⁻¹ or over.

As the inorganic substance powder comprising a lithium ion conductive crystal or the lithium ion conductive glass-ceramic powder having a high ion conductivity and contained in the solid electrolyte of the present invention, the inorganic substance comprising a lithium ion conductive crystal or then lithium ion conductive glass-ceramic which has been crushed to powder is used. This inorganic substance powder comprising a lithium ion conductive crystal or the lithium ion conductive glass-ceramic powder should preferably be dispersed uniformly in the solid electrolyte from the standpoints of ion conductivity and mechanical strength. For improving dispersion and achieving a desired thickness of the solid electrolyte, the inorganic substance powder or the glass-ceramic powder should preferably have an average particle diameter of 9 µm or below, more preferably 6 µm or below and, most preferably, 3 µm or below.

The lithium ion conductive glass-ceramic or lithium ion conductive glass-ceramic contained in the positive electrode and/or the negative electrode of the lithium ion secondary battery of the present invention is made by heat treating a mother glass of a Li₂O - Al₂O₃ - TiO₂ - SiO₂ - P₂O₅ composition for crystallization and has, as its predominant crystal phase, a crystal phase of Li_{1+x+y}AlₓTi₂₋ₓSi_{y}P_{3-y}O₁₂ where x and y are 0≦x≦1 1 and 0≦y≦1. From the standpoint of excellent ion conductivity, x and y should more preferably be 0 ≦x≦0.4 and 0≦y≦0.6 and, most preferably, 0.1 ≦x≦0.3 and 0.1<y≦0.4.

The inorganic substance comprising a lithium ion conductive crystal contained in the solid electrolyte of the invention or the inorganic substance comprising a lithium ion conductive crystal contained in the positive electrode and/or the negative electrode of the lithium ion secondary battery of the present invention has, as its predominant crystal phase, a crystal phase of Li_{1+x+y}AlₓTi₂₋ₓSi_{y}P_{3-y}O₁₂ where x and y are 0≦x≦ 1 and 0≦y≦1. From the standpoint of excellent ion conductivity, x and y should more preferably be 0 ≦x≦0.4 and 0<y≦0.6 and, most preferably, 0.1 ≦x≦0.3 and 0:1<y≦0.4.

Composition ratios expressed in mol % and results thereof of respective components constituting the lithium ion conductive glass-ceramic or the lithium ion conductive glass-ceramic contained in the positive electrode and/or the negative electrode of the lithium ion secondary battery of the present invention will now be specifically described.

Li₂O is an indispensable component for providing Li⁺ ion carrier and thereby imparting the glass-ceramic with lithium ion conductivity. For achieving an excellent ion conductivity, the lower limit of the amount of this component should preferably be 12%, more preferably be 13% and, most preferably be 14%. The upper limit of the amount of this component should preferably be 18%, more preferably be 17% and, most preferably be 16%.

Al₂O₃ is effective for improving thermal stability of the mother glass and also for providing Al³⁺ ion as a solid solution in the above described crystal phase and thereby improving lithium ion conductivity. For achieving these effects, the lower limit of the amount of this component should preferably be 5%, more preferably be 5.5% and, most preferably be 6%. If, however, the amount of this component exceeds 10%, thermal stability of the glass is deteriorated rather than is improved and ion conductivity of the glass-ceramic is reduced. Therefore, the upper limit of the amount of this component should preferably be 10%, more preferably be 9.5% and, most preferably be 9%.

TiO₂ and GeO₂ contribute to forming of the glass and also constitute the above described crystal phase. In both the glass and the glass-ceramic, these components can be continuously replaced by each other. For vitrification, at least one of these components must be added and, for causing the above described crystal phase to precipitate as a predominant crystal phrase and hereby improving ion conductivity, the lower limit of the total amount of these components should preferably be 35%, more preferably be 36% and, most preferably be 37%. The upper limit of the total amount of these components should preferably be 45%, more preferably be 43% and, most preferably be 42%.

SiO₂ is effective for improving thermal stability of the mother glass and also for providing Si⁴⁺ ion as a solid solution in the above described crystal phase and thereby improving lithium ion conductivity. For achieving these effects sufficiently, the lower limit of the amount of this component should preferably be 1%, more preferably be 2% and, most preferably be 3%. If, however, the amount of this component exceeds 10%, ion conductivity of the glass-ceramic is reduced rather than is improved. Therefore, the upper limit of the amount of this component should preferably be 10%, more preferably be 8% and, most preferably be 7%.

P₂O₅ is an indispensable component as a glass former and also is a component which constitutes the above described crystal phase. If the amount of this component is less than 30%, difficulty arises in vitrification. Therefore, the lower limit of the amount of this component should preferably be 30%, more preferably be 32% and, most preferably be 33%. If the amount of this component exceeds 40%, difficulty arises in the precipitation of the above described crystal phase in the glass. Therefore, the upper limit of the amount of this component should preferably be 40%, more preferably be 39% and, most preferably be 38%.

The composition ratios of the above described respective components can be expressed in mass % below for achieving the same effects as those described above with respect to the composition ratios expressed in mol %,

As to Li₂O, the lower limit of the amount of this component should preferably be 3 mass %, more preferably be 4 mass % and, most preferably be 5 mass %. The upper limit of the amount of this component should preferably be 10 mass %, more preferably be 9 mass % and, most preferably be 8 mass %.

As to Al₂O₃, the lower limit of the amount of this component should preferably be 5 mass %, more preferably be 6 mass % and, most preferably be 7 mass %. The upper limit of the amount of this component should preferably be 20 mass %, more preferably be 19 mass % and, most preferably be 18 mass %.

As to TiO₂ and GeO₂, the lower limit of the total amount of these components should preferably be 25 mass %, more preferably be 26 mass % and, most preferably be 27 mass %. The upper limit of the total amount of these components should preferably be 40 mass %, more preferably be 39 mass % and, most preferably be 38 mass %.

As to SiO₂, the lower limit of the amount of this component should preferably be 0.5 mass %, more preferably be 1 mass % and, most preferably be 2 mass %. The upper limit of the amount of this component should preferably be 8 mass %, more preferably be 7 mass % and, most preferably be 6 mass %.

As to P₂O₅, the lower limit of the amount of this component should preferably be 40 mass %, more preferably be 41 mass % and, most preferably be 42 mass %. The upper limit of the amount of this component should preferably be 55 mass %, more preferably be 54 mass % and, most preferably be 53 mass %.

In the above described composition, a glass can be easily obtained by casting molten glass and a glass-ceramic obtained by heat treating this glass hiss the above described crystal phase and exhibits an excellent lithium ion conductivity.

Aside from the above described composition, in a glass-ceramic having a crystal structure similar to the one described above, Al₂O₃ can be replaced by Ga₂O₃ partly or in whole and TiO₂ can be replaced by GeO₂ partly or in whole. In the manufacture of the glass-ceramic, other material may be added in small amounts for lowering the melting point or improving stability of the glass within a range not to deteriorate ion conductivity.

The ion conductive organic polymer added to the solid electrolyte comprising the inorganic substance comprising a lithium ion conductive crystal or the lithium ion conductive glass-ceramic should preferably be formed in the form of a flexibly sheet when it is combined with the inorganic substance or the glass-ceramic from the standpoint that the capacity of the battery per volume can be increased when it is used as the battery and it can be formed to various shapes owing to its flexibility.

For imparting the organic polymer with ion conductivity, a desired type of lithium salt is dissolved in the organic polymer. For this purpose, lithium salts which dissolve in the organic polymer and discharge lithium ion may preferably be used. Such lithium salts include, for example, LiBF₄, LiCF₃SO₃, LiSO₃CH₃, LiN(SO₂CF₃)₂, LiN(SO₂C₂F₅)₂, LiC(SO₃CF₃)₃, organic ion type polysulfide, Li[B(C₆H₄O₂)₂], Li[B(C₆H₃FO₂)₂] and LiTFSI.

When the organic polymer contained in the solid electrolyte has no ion conductivity at all but it is an insulating material, a solid electrolyte having a high ion conductivity cannot be obtained even if this organic polymer is combined with the inorganic substance or the glass-ceramic having a high ion conductivity. For this reason, the organic polymer, should have ion conductivity The ion conductivity of the organic polymer should preferably be 1 × 10⁻⁸S · cm⁻¹ or over and, more preferably be 1 × 10⁻⁶S · cm⁻¹ or over and, most preferably be 1 × 10⁻⁵S · cm⁻¹ or over.

For achieving the above described ion conductivity of the organic polymer, the organic polymer is either one of a copolymer and a bridge structure thereof, of polyethylene oxide and other organic polymer or polymers. When the organic polymer alone is used, ion conductivity can be increased if its molecular weight is made small but, in this case, its strength is weak and the polymer becomes a gel with the result that it becomes difficulty to handle it in a normal manner. Conversely, when its molecular weight is made large, its strength is improved but ion conductivity is deteriorated significantly. In contrast to such use of the organic polymer alone, the employment of a plurality of polymers enables control of properties including ion conductivity and strength by selecting the type, size and structure of the organic polymers to be contained whereby production of an organic polymer capable of being treated easily and having an excellent ion conductivity can be realized.

Polyethylene oxide is important in performing the function of imparting the organic polymer contained mainly in the solid electrolyte with a high ion conductivity The above described other polymer or polymers mainly perform the function of imparting the organic polymer with a high strength. Such other polymer or polymers are selected from one or more polymers selected from the group consisting of polypropylene oxide, polyolefins, fluorine resins such as polytetrafluoroethylene, polychlorotrifluoroethylene, polyvinylidene fluoride, polyamides, polyesters, polyacrylate, allylglycidyl ether and polymethacrylate.

By composing the solid electrolyte in such a manner, as higher ion conductivity and greater easiness in handling can be obtained than in the case of using polyethylene oxide or other organic polymer alone.

If the amount of the highly conductive inorganic substance powder comprising a lithium ion conductive crystal or the lithium ion conductive glass-ceramic powder in the solid electrolyte is small, the high lithium ion conductivity of the inorganic substance comprising a lithium ion conductive crystal or the glass-ceramic cannot be exhibited sufficiently in the solid electrolyte. Conversely, if the amount of the inorganic substance or the glass-ceramic is excessively large, the amount of organic polymer which functions as a binder becomes relatively small with the result that adhesion of the inorganic substance or the glass-ceramic and the organic polymer becomes weak and mobility of lithium ion in the inorganic substance powder or the glass-ceramic powder is deteriorated and, moreover, strength of the solid electrolyte is weakened. For this reason, the lower limit of the amount of the inorganic substance powder comprising a lithium ion conductive crystal or the lithium ion conductive glass-ceramic powder in the solid electrolyte of the present invention should preferably be 50 mass %, more preferably be 55 mass % and, most preferably be 60 mass %. The upper limit of the amount of the inorganic substance powder or the glass-ceramic powder should preferably be 95 mass %, more preferably be 90 mass % and, most preferably be 80 mass %.

In the present invention, by adopting the above described specific structures of the inorganic substance or glass-ceramic and organic polymer, a solid electrolyte having an excellent ion conductivity whiles maintaining thickness which is sufficient for enabling the solid electrolyte to be handled by itself.

The positive electrode of the lithium ion secondary battery of the present invention comprises at least a positive electrode active material to be described later. It should preferably comprise a positive electrode compound and a positive electrode collector. The negative electrode comprises at least a negative electrode active material to be described later. It should preferably comprise a positive electrode compound and a positive electrode collector.

The positive electrode compound and/or the negative electrode compound of the lithium ion secondary battery of the present invention should preferably comprise an active material, an ion conduction additive and/or an electron conduction additive, and a binder for binding them together.

The positive electrode compound and/or the negative electrode compound can be manufactured simply by mixing an active material, an ion conduction additives and a binder together in a solvent and drying the mixture. In this specification, this method will hereinafter be called a simple mixing method.

From the standpoint of providing a battery of a higher capacity by reducing the amount of the ion conduction additive, it is preferable to manufacture the positive electrode compound and/or the negative electrode compound not by the simple mixing method but by employing a mixing method according to which an ion conduction additive and/or an electron conduction additive is fixed on the surface of particles of an active material by means of a binder. This method will hereinafter be called a fixing mixing method.

Removal and addition of lithium ion from and to the active materials due to charging and discharging cause change in the volume of the positive compound and the negative compound. Expansion and contraction of the active materials cause gradual stripping off of the electron conduction additive and the ion conduction additive from the active materials with resulting increase in the amount of the active materials in which removal and addition of lithium ion are not possible. This is likely to cause deterioration in the charging-discharging cycles.

By employing the fixing mixing method, fine particles of the electron conduction additive and ion conduction additive are fixed on the surface of the active material by the binder and, therefore, stripping off of the fine particles of the electron conduction additive and the ion conduction additive in case of expansion and contraction of the active material can be prevented and, accordingly, the ion and electron conduction additives can be added without significant deterioration in the capacity accompanying charging and discharging and reduction in the capacity per unit volume and unit weight.

As the fixing mixing method, the following method may preferably be employed. A conduction additive and a binder are mixed into a dispersed liquid in the state of a slurry by using a solvent and this dispersed liquid is poured into or sprayed over an active material which is flowing or rotating at a high speed and, then the mixture is dried at a temperature above the boiling point of the solvent. In mixing the active material with the conduction additive, the greater the difference in the particle diameters of these two materials, the more often an interruptive mixture tends to occur resulting in enhancing the tendency that fine particles of the conduction additive are deposited on each of large particles of the active material and a layer of the conduction additive is thereby formed on the surface of the active material.

The fixing mixing method is not limited to this method. For example, an active material and a conduction additive having sufficiently great difference in the particle diameter may be dispersed together with a binder in a solvent and then may be dried by hot air drying or by freeze-drying. The fixing mixing method may also be realized by employing conventional granulation and surface coating techniques.

As the active material used for a positive electrode material of the lithium ion secondary battery of the invention, a transition metal compound may be used. For example, at least one transition metal compound selected from the group consisting of manganese, cobalt, nickel, vanadium, niobium, molybdenum, titanium, iron and phosphor may be used. Since most active materials scarcely have electron conductivity and ion conductivity, an electron conduction additive and an ion conduction additive should preferably be used. Such electron conduction additives include, for example, conductive carbon, graphite, carbon fiber, metal powder, metal fiber and electron conductive polymer. Such ion conduction additives include, for example, an inorganic substance including a lithium ion conductive crystal, an ion conductive glass-ceramic, and an ion conductive polymer. These electron and ion conduction additives should preferably be added in an amount within a range from 3 - 35 mass %, more preferably 4-30 mass % and, most preferably, 5 - 25 mass %, to the positive electrode material (positive electrode active material).

As the active material used for a negative electrode material of the lithium ion secondary battery of the invention, metal lithium, alloys which can store and discharge lithium such as a lithium-aluminum alloy, and a lithium-indium alloy, transition metal compounds such as titanium and vanadium, and carbon type materials such as graphite may preferably be used. As an electron conduction additive, for example, conductive carbon, graphite, carbon fiber, metal powder, metal fiber and electron conductive polymer may be preferably used. As an ion conduction additive, for example, an inorganic substance including a lithium ion conductive crystal, an ion conductive glass-ceramic, and an ion conductive polymer may preferably be used. These electron and ion conduction additives should preferably be added in an amount within a range from 3 - 35 mass %, more preferably 4 - 30 mass % and, most preferably, 5 - 25 mass %, to the negative electrode material (negative electrode active material).

When the inorganic substance comprising a lithium ion conductive crystal or the lithium ion conductive glass-ceramic is added to the positive electrode and/or the negative electrode of the lithium ion secondary battery, it should preferably be in the form of powder.

In case the positive electrode compound and/or the negative electrode compound is made by the simple mixing method, the average particle diameter of the inorganic substance powder comprising a lithium ion conductive crystal or the lithium ion conductive glass-ceramic powder should preferably be one-fifth or below, more preferably be one-seventh or below and, most preferably be one-tenths or below, of the average particle diameter of the active material of the positive electrode and/or the negative electrode By making the average particle diameter of the inorganic substance powder or the glass-ceramic powder which is an additive sufficiently small as compared with the average particle diameter of the active material, the area of contact of such additive with the active material increases and sufficient ion conductivity can be imparted by addition of such additive in an amount which will not reduce the battery capacity. If, the average particle diameter of the inorganic substance powder or the glass-ceramic powder is the same or larger than the average particle diameter of the active material of the positive electrode and/or the negative electrode, a large amount of the inorganic substance powder or the glass-ceramic powder must be added for imparting sufficient ion conductivity to the positive electrode material and/or the negative electrode material. If, for example, the particle diameter is the same; the inorganic substance powder or the glass-ceramic powder in the same amount as or a larger amount than the active material will have to be added. This will necessitate reduction in the amount of the active material in the positive electrode material and/or the negative electrode material with resulting difficulty in achieving a battery of a high capacity.

In the case of manufacturing the positive electrode compound and/or the negative electrode compound by the simple mixing method, the inorganic substance comprising a lithium ion conductive crystal or the lithium ion conductive glass-ceramic added to the positive electrode or the negative electrode as the ion conductive additive is necessary for imparting the positive electrode compound and/or the negative electrode compound with sufficient ion conductivity for achieving excellent charging and discharging and, therefore, should preferably be added in an amount of 10 mass % or over, more preferably 12 mass % or over and, most preferably 15 mass % or over to the active material of the positive electrode and/or the negative electrode comprising the above described inorganic substance or glass-ceramic. If, however, the amount of the inorganic substance comprising a lithium ion conductive crystal or the lithium ion conductive glass-ceramic increases, the amount of the active materials in the positive electrode compound and/or the negative electrode compound decreases and the battery capacity per unit volume or unit weight is deteriorated. Therefore, the amount of the inorganic substance or glass-ceramic added to the positive electrode and/or the negative electrode should preferably be 35 mass % or below, more preferably be 30 mass % or below and, most preferably be 25 mass % or below.

In the case of manufacturing the positive electrode compound and/or the negative electrode compound by the fixing mixing method, the average particle diameter of the inorganic substance comprising a lithium ion conductive crystal or the lithium ion conductive glass-ceramic should preferably be one-fifth or below, more preferably one-seventh or below and, most preferably one-tenth or below of the average particle diameter of the active material of the positive electrode and/or the negative electrode. Since a sufficient effect can be achieved with a smaller amount of ion conduction additive than in the case of using the simple mixing method, for realizing a battery of a high capacity, the amount of the ion conduction additive should preferably be 2 mass % or over, more preferably 2.5 mass % or over and, most preferably 3 mass % or over of the amount of active material comprising the inorganic substance or the glass-ceramic of the positive electrode and/or the negative electrode. For maintaining as much as active material as possible, the upper limit of the inorganic substance comprising a lithium ion conductive crystal or the lithium ion conductive glass-ceramic should preferably be 15 mass %, more preferably 12 mass % and, most preferably 10 mass %. The same is the case with the electron conduction additive and, by making the particle diameter of the electron conduction additive smaller, the same or better effect of the electron conduction additive can be achieved with a smaller amount than before.

The inorganic substance comprising a lithium ion conductive crystal and the ion conductive polymer, or the ion conductive glass-ceramic and the organic polymer added to the positive electrode and the negative electrode should preferably be the same inorganic substance or glass-ceramic and organic polymer as the inorganic substance or glass-ceramic and organic polymer contained in the solid electrolyte. In this case, the same inorganic substance comprising a lithium ion conductive crystal or glass-ceramic means an inorganic substance comprising a lithium ion conductive crystal or a glass-ceramic which has the same crystal phase. Since the crystal phase is the same, the ion moving mechanism in the polymer contained in the electrolyte and the polymer contained in the electrode material is unified and moving of ion between the electrolyte and the electrodes is smoothly made and, therefore, a battery of a higher output and a higher capacity can be provided.

As the binder used in case of manufacturing the positive electrode compound and/or the negative electrode compound by mixing and binding the active material and the conduction additives, PVdF, PTFE and SBR rubber may be used but an ion conductive binder may preferably be used, for it will impart ion conductivity.

Ion conductive binders include polymer materials such, for example, as polyethylene oxide, polypropylene oxide, polyolefins, fluoride resins (e.g., polytetrafluoroethylene, poly-chlorotrifluoroethylene and polyvinylidene fluoride), polyamides, polyesters, polyacrylate and copolymers, bridge structures and mixtures thereof. It is also possible to increase ion conductivity of these materials by adding desired lithium salt such, for example, as LiBF₄, LiSO₃CF₃, LiSO₃CH₃, LiN(SO₂CF₃)₂, LiN(SO₂C₂F₅)₂, LiC(SO₂CF₃)₃ and organic ion type polysulfide.

### Examples

Description will now be made about specific examples of the solid electrolyte comprising the inorganic substance comprising a lithium ion conductive crystal and the lithium ion conductive organic polymer, the solid electrolyte comprising the lithium ion conductive glass-ceramic and the lithium ion conductive organic polymer, and the lithium ion secondary battery employing such solid electrolyte made according to the present invention. Description will also be made about comparative examples for explaining about advantages of the examples of the present invention.

### Example 1

### Preparation of lithium ion conductive glass-ceramic

Raw materials of H₃PO₄, Al(PO₃)₃, Li₂CO₃, SiO₂ and TiO₂ were weighed and mixed uniformly to make a composition of 35.0% P₂O₅, 7.5% Al₂O₃, 15.0% Li₂O, 38.0% TiO₂ and 4.5% SiO₂ expressed in mol % on oxide basis. The mixture was put in a platinum pot and was heated and melted in an electric furnace at 1500°C for three hourswhile the molten glass was stirred. Then, the melt was dropped into flowing water to produce flakes of glass. The glass was heated at 950°C for twelve hours for crystallization and the target glass-ceramic was thereby obtained. By powder X-ray diffraction, it was confirmed that the predominant crystal phase precipitating was Li_{1+x+y}AlₓTi₂₋ₓSi_{y}P_{3-y}O₁₂ (0≦x≦0.4, 0≦y≦0.6). Flakes of the glass-ceramic produced were crushed by a ball mill and fine particles of the glass-ceramic having an average particle diameter of 2 µm and maximum particle diameter of 8 µm were obtained.

### preparation of Solid Electrolyte

The glass-ceramic thus obtained and a copolymer of polyethylene oxide and polypropylene oxide added with LiBF₄ as a lithium salt were mixed uniformly at a ratio of 80 : 20 in an ethanol solvent and the mixture was coated on a PET film which had been applied with a treatment for releasing and dried at a room temperature and then further dried under reduced pressure at 120°C for removing the solvent by evaporation. Another PET film which had been applied with a treatment for releasing was adhered to the solid electrolyte thus obtained. The composite electrolyte was then heated at 150°C and was pressed by a roll press to remove bubbles remaining in the composite electrolyte (i.e., solid electrolyte). Then, the PET films on both sides of the solid electrolyte were stripped off. The solid electrolyte sheet obtained had thickness of 40 µm. By holding this solid electrolyte with a pair of stainless steel sheets and a specimen for measuring lithium ion conductivity was prepared using these stainless steel sheets as electrodes. Impedance of the specimen at a room temperature of 25°C was measured for calculating ion conductivity. As a result, ion conductivity was found to be 1.3 ×10⁻⁴S· cm⁻¹.

### Comparative Example 1

The same glass-ceramic powder as Example 1 and the copolymer of polyethylene oxide and polypropylene oxide added with no lithium salt were mixed and formed to a sheet of solid electrolyte in the same manner as in Example 1 to measure ion conductivity of this sheet. As a result ion conductivity of this sheet was 7 × 10⁻⁹S· cm⁻¹ which was more than four digits lower than ion conductivity of Example 1.

### Example 2

### Preparation of a positive electrode

As an active material of the positive electrode, a commercially available LiCoO₂ (average particle diameter of 6µm) was used This active material of the positive electrode was mixed with a copolymer of polyethylene oxide and polypropylene oxide added with acetylene black, an electron conduction additive and LiBF₄, a lithium salt used as an ion conduction additive and a binder in an ethanol solvent. This mixture was coated uniformly on an aluminum sheet having thickness of 16 µm which constituted a positive electrode collector and was dried at 120°Cto produce a positive electrode in the form of a sheet. This positive electrode had thickness of 100 µm.

### Preparation of a negative electrode

As a negative electrode, a commercially available graphite powder (average particle diameter of 10µm) was used. This negative electrode material was mixed with a copolymer of polyethylene oxide and polypropylene oxide added with LiBF₄, a lithium salt used as an ion conduction additive and a binder in an ethanol solvent. This mixture was coated on a copper sheet having thickness of 12 µm which constituted a negative electrode collector and was dried at 120°C to produce a negative electrode in the form of a sheet. This negative electrode had thickness of 70 µm.

### Assembly of a battery

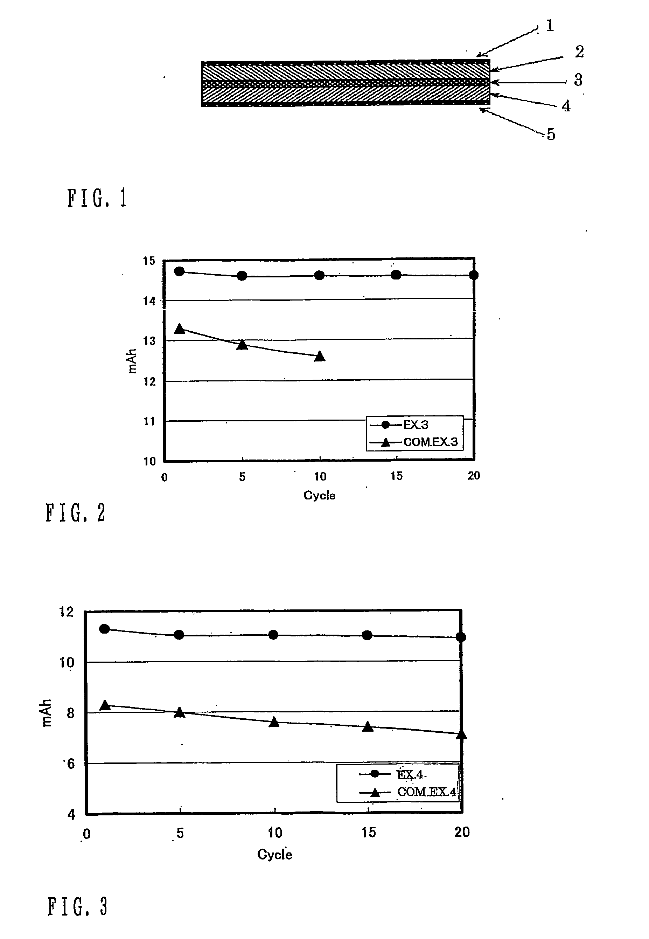

The positive electrode, the solid electrolyte formed in the sheet made.in Example 1 and the negative electrode were superposed one upon another heated at 150°C, pressed by a roll press and cut into a sheet of 25 × 40mm. The thickness of the cell was 230 µm. The cell was then dried under reduced pressure and sealed in laminate sheets attached with lead lines to assemble a battery. The internal structure of this battery is shown in the section of FIG. 1. In FIG. 1, reference character 1 designates a positive electrode collector, 2 a positive electrode compound, 3 a composite electrolyte (solid electrolyte), 4 a negative electrode compound and 5 a negative electrode collector.

A charging-discharging measurement was made with respect to the assembled battery under conditions of a room temperature of 25°C, constant current of 0.3mA, cut-off voltage of 4.2V for charging and 3.0V for discharging. Initial discharging capacity was 19.4mAh and discharging capacity after repeating of 20 cycles was 19.0mAh which was 98% of the initial discharging capacity.

### Comparative Example 2

The same battery as in Example 2 was assembled by using the sheet of Comparative Example 1 as an electrolyte sheet and a charging-discharging measurement was conducted under the same conditions as in Example 2. Only 1mAh or below could be measured.

### Example 3

### Preparation of a solid electrolyte

The glass-ceramic powder obtained in Example 1 was mixed uniformly with a copolymer of polyethylene oxide, polypropylene oxide and 2-methoxyethoxyethylglicidyl ether added with LiTFSI (lithium bistrifluoromethyl sulfonyl imide) at a ratio of 75 : 25 in a solvent of ethyl methylketone. The mixture was then coated on a PET film which had been applied with a treatment for releasing and dried at a room temperature and then further dried under reduced pressure at 130°C for removing the solvent by evaporation. Another PET film which had been applied with a treatment for releasing was adhered to the solid electrolyte thus obtained. The composite electrolyte was then heated at 130°C and was pressed by a roll press to remove bubbles remaining in the composite electrolyte. Then, the PET films on both sides of the solid electrolyte were stripped off. The solid electrolyte obtained had thickness of 35 µm.

### Preparation of a positive electrode

As an active material of the positive electrode, a commercially available LiM-n₂O₃ (average particle diameter of 10 µ m) was used. This active material was mixed with a copolymer of polyethylene oxide, polypropylene oxide and 2-methoxyethoxyethylglicidyl ether added with acetylene black, an electron conduction additive, and LiTFSI (lithium bistrifluoromethyl sulfonyl imide), a lithium salt used as an ion conduction additive and binder in a solvent of ethyl methyl ketone. This mixture was then coated uniformly on an aluminum sheet having.thickness of 16µm which constituted a positive electrode collector and dried at 130°C to produce a positive electrode in the form of a sheet. This positive electrode had thickness of 100 µm.

### Preparation of a negative electrode

As an active material of the negative electrode, a commercially available Li₄Ti₅O₁₂ (average particle diameter of 3 µm) was used. This active material was mixed with a copolymer of polyethylene oxide, polypropylene oxide and 2-methoxyethoxyethylglicidyl ether added with LiTFSI (lithium bistrifluoromethyl sulfonyl imide), a lithium salt used as an ion conduction additive and binder in a solvent of ethyl methyl ketone. This mixture was then coated on a copper sheet having thickness of 12 µm which constituted a negative electrode collector and dried at 130 °C to produce a negative electrode in the form of a sheet. This negative electrode had thickness of 70 µm.

### Assembly of a battery

The positive electrode, the solid electrolyte formed in the sheet made in Example 1, and the negative electrode were superposed one upon the another, heated at 150°C, pressed by a roll press and cut into a sheet of 25 × 40mm. The thickness of the cell was 235 µm. The cell was then dried under reduced pressure and sealed in laminate sheets attached with lead lines to assemble a battery.

A charging-discharging measurement was made with respect to the assembled battery under conditions of a room temperature of 25°C, constant current of 0.2mA, cut-off voltage of 3.0V for charging and 1.5V for discharging Initial discharging capacity was 14.7mAh and discharging capacity after repeating of 20 cycles was 14.6mAh which was about the same as the initial discharging capacity.

### Comparative Example 3

An electrolyte sheet was prepared by using a copolymer of polyethylene oxide, polypropylene oxide and 2-methoxyethoxyethylglicidyl ether added with LiTFSI which did not contain glass-ceramic. A battery was assembled by using the same positive electrode and negative electrode as in Example 3 and a charging-discharging measurement was conducted under the same conditions as in Example 3. Initial discharging capacity was 13.3mAh which was a little lower capacity than in Example 3. This is because the electrolyte sheet did not contain glass-ceramic which had a high ion conductivity and therefore resistance to moving of ion was high. Further, in Comparative Example 3, internal short-circuiting occurred frequently between the positive electrode and the negative electrode and, as a result, a test up to 20 cycles could not be conducted. This occurred because the positive electrode and the negative electrode partially contacted or nearly contacted each other due to pressing by the roll press in assembling the battery. Since such internal short-circuiting did not occur in the battery of Example 3, it is confirmed that the glass-ceramic powder contained in the electrolyte sheet of Example 3 had a function of a good spacer.

Change in the discharging capacity accompanying the charging-discharging cycles of the lithium ion secondary batteries of Example 3 and Comparative Example 3 is shown in FIG. 2.

### Example 4

### Preparation of a solid electrolyte

The glass-ceramic obtained in Example 1 was crushed by using a wet type ball mill to provide fine powder of the glass-ceramic having an average particle diameter of 0.3 µm and maximum particle diameter of 3 µm. This glass-ceramic powder was mixed uniformly with a copolymer of polyethylene oxide and polypropylene oxide added with LiCF₃SO₃ at a ratio of 65 : 35 in a solvent of THF (tetrahydrofuran).. The mixture was coated on a PET film which had been pretreated for releasing, dried at a room temperature and then further dried under reduced pressure at 110°C for removing the solvent by evaporation. Another PET film which had been pretreated for releasing was adhered to the solid electrolyte thus obtained. The composite electrolyte was then heated at 130°C and was pressed by a roll press to remove bubbles remaining in the composite electrolyte (i.e., solid electrolyte). The solid electrolyte sheet obtained had thickness of 32 µm.

### Preparation of a positive electrode

As an active material of the positive electrode, a commercially available LiCoO₂ (average particle diameter of 6 µm) was used This active material of the positive electrode was mixed with a copolymer of polyethylene oxide and polypropylene oxide added with acetylene black, an electron conduction additive and LiCF₃SO₃, a lithium salt used as an ion conduction additive and a binder in a THF solvent. This mixture was coated uniformly on an aluminum sheet having thickness of 12 µm which constituted a positive electrode collector and was dried at 120°Cto produce a positive electrode in the form of a sheet. This positive electrode had thickness of 40 µm.

### Preparation of a negative electrode

As a negative electrode, a commercially available graphite powder (average particle diameter of 3 µm) was used. This negative electrode material was mixed with a copolymer of polyethylene oxide and polypropylene oxide added with LiCF₃SO₃, a lithium salt used as an ion conduction additive and a binder in a THF solvent. This mixture was coated on a copper sheet having thickness of 10µm which constituted a negative electrode collector and was dried at 120°C to produce a negative electrode in the form of a sheet. This negative electrode had thickness of 30 µm.

### Assembly of a battery

After stripping off the PET film which had been pretreated for releasing on one side of the solid electrolyte made in Example 1, the positive electrode material was adhered to this side of the solid electrolyte by means of a roll press. Then, after stripping off the PET film which had been pretreated for releasing on the other side of the solid electrolyte, the negative electrode material was adhered to this side of the solid electrolyte by means of a roll press. The composite solid electrolyte was then heated at 150°C and pressed by a roll press and cut into a sheet of 25 × 40 mm. The thickness of the cell was about 116 µm. The cell was then dried under reduced pressure and sealed in laminate sheets attached with lead lines to assemble a battery.

A charging-discharging measurement was made with respect to the assembled battery under conditions of a room temperature of 25°C, constant current of 0.2mA, cut-off voltage of 4.2V for charging and 3.2V for discharging. Initial discharging capacity was 11.3mAh and discharging capacity after repeating of 20 cycles was 10.9mAh which was about 96% or over of the initial discharging capacity.

### Comparative Example 4

A composite electrolyte (solid electrolyte) was prepared by the same method as in Example 4 by using silica powder having average particle diameter of 0.3 µm instead of a lithium ion conductive glass-ceramic. A battery was assembled by using the same positive electrode and negative electrode as in Example 4 and a charging-discharging measurement was made under the same conditions as in Example 4. Initial discharging capacity was 8.3 mAh and discharging capacity after repeating of 20 cycles was 7.1 mAh. As compared with Example 4, deterioration after repeated cycles was larger and the capacity was much smaller. Change in the discharging capacity accompanying the charging-discharging cycles of the lithium ion secondary batteries of Example 4 and Comparative Example 4 is shown in FIG. 3. The capacity of the battery of Example 4 is higher because it contains a large amount of glass-ceramic having a high ion conductivity and, as a result, conductivity of the electrolyte is much higher than the electrolyte containing the polymer only and moving of ion thereby is facilitated. In contrast, the battery of Comparative Example 4 exhibits some improvement in conductivity by the addition of silica but this improvement effect is rather small as compared with the battery of Example 4.

### Comparative Example 5

### Preparation of a solid electrolyte

Glass-ceramic powder was mixed uniformly with polyethylene oxide added with LiBF₄ as a lithium salt in an acetone solvent. This mixture was coated on a cast sheet in thickness of 50 µm, dried and pressed by a roll press to a sheet of solid electrolyte having thickness of 30 µm.

### Preparation of a positive electrode

LiMn₂O₄ was used as a positive electrode active material. This active material for the positive electrode was mixed with acetylene black as an electron conduction additive, glass-ceramic powder which was an ion conduction additive and contained, as a predominant crystal phase, Li_{1+x+y}AlₓTi₂₋ₓSi_{y}P_{3-y}O₁₂, and a binder in an acetone solvent. This mixture was coated on an aluminum sheet having thickness of 10 µm which constituted a positive electrode collector to thickness of about 50 µm to produce a positive electrode layer.

### Preparation of a negative electrode

Li₄Ti₅O₁₂ was used as a negative electrode active material. This active material for the negative electrode was mixed with glass-ceramic powder as an ion conductive addtive and PVdF as a binder in an acetone solvent. This mixture was coated on a copper sheet having thickness of 10µm which constituted a negative electrode collector to thickness of about 50 µm to produce a negative electrode layer.

### Assembly of a battery

The positive electrode layer and the negative electrode layer were adhered to both sides of the solid electrolyte in the form of a sheet (separator) and the composite layers were pressed by a roll press to a battery in the form of a sheet having thickness of 150 µm. The sheet was cut into a sheet of 25 × 40mm and lead lines were attached to the positive electrode collector and the negative electrode collector. The charging-discharging cycle test was conducted under the same conditions as in Example 4. Initial discharging capacity and discharging capacity after repeating of 20 cycles are shown in Table 1.

**Table 1**

| Example 4 | | | |
|---|---|---|---|
| Initial capacity (mAh) | 11.3 | Capacity after 20 cycles (mAh) | 10.9 |
| | | | |

| Comparative Example 5 | | | |
|---|---|---|---|
| Initial capacity (mAh) | 8.5 | Capacity after 20 cycles(mAh) | 7.9 |

As compared with Comparative Example 5 which uses a conventional binder for an electrode material, Example 4 exhibits a higher capacity. This is because, in Example 4, other organic polymer was used in addition to polyethylene oxide in the solid electrolyte and a high ion conductivity was thereby realized while maintaining facility in handling and, besides, by using the same type of ion conductive polymer for both the electrolyte and the electrodes materials, not only high conductivity was realized but also interface movement of ion between the electrolyte and the electrodes was made smooth.

### Example 5

### Preparation of lithium ion conductive glass-ceramic

Raw materials of H₃PO₄, Al(PO₃)₃, Li₂CO₃, SiO₂ and TiO₂ were weighed and mixed uniformly to make a composition of 35.0% P₂O₅, 7.5% Al₂O₃, -15.0%-Li₂O, 38.0% TiO₂ and 4.5% SiO₂ expressed in mol % on oxide basis. The mixture was put in a platinum pot and was heated and melted in an electric furnace at 1500°C for three hours while the molten glass was stirred Then, the melt was dropped into flowing water to produce flakes of glass. The glass was heated at 950°C for twelve hours for crystallization and the target glass-ceramic was thereby obtained. By powder X-ray diffraction, it was confirmed that the predominant crystal phase precipitating was Li_{1+x+y}AlₓTi₂₋ₓSi_{y}P_{3-y}O₁₂ (0≦x≦0.4, 0<y≦0.6). Flakes of the glass-ceramic produced were crushed by a ball mill and fine powder of the glass-ceramic having an average particle diameter of 2µm and maximum particle diameter of 9µm was obtained. This fine powder A was further crushed by a wet type ball mill and slurry B containing fine powder of glass-ceramic having an average particle diameter of 0.2µm and maximum particle diameter of 0.3µ m was obtained.

### Preparation of a solid electrolyte

The glass-ceramic powder A thus obtained and a copolymer of polyethylene oxide and polypropylene oxide added with LiBF₄ as a lithium salt were mixed uniformly at a ratio of 80 : 20 in an ethanol solvent and the mixture was coated on a PET film which had been pretreated for releasing and dried at a room temperature and then further dried under reduced pressure at 120°C for removing the solvent by evaporation. Another PET film which had been pretreated for releasing was adhered to the solid electrolyte thus obtained. The composite electrolyte was then heated at 150°C and was pressed by a roll press to remove bubbles remaining in the composite electrolyte (i.e., solid electrolyte). Then, the PET films on both sides of the solid electrolyte were stripped off. The solid electrolyte sheet obtained had thickness of 30µm. By holding this solid electrolyte with a pair of stainless steel sheets and a specimen for measuring lithium ion conductivity was prepared using these stainless steel sheets as electrodes. Impedance of the specimen at a room temperature of 25°C was measured for calculating ion conductivity. As a result, ion conductivity was found to be 1.6 × 10⁻⁴S · cm⁻¹.

### Preparation of a positive electrode

As an active material of the positive electrode, a commercially available LiCoO₂ (average particle diameter of 6µm) was used. This active material of the positive electrode was mixed by a two-axle mixer with acetylene black (average particle diameter of 50µm), an electron conduction additive, in an amount of 5 mass % of the positive electrode active material, and a copolymer of polyethylene oxide and polypropylene oxide added with LiBF₄, a lithium salt used as an ion conduction additive and a binder in an ethanol solvent. This mixture was coated uniformly on an aluminum sheet having thickness of 16µm which constituted a positive electrode collector and was dried at 120°Cto produce a positive electrode in the form of a sheet. This positive electrode had thickness of 50µm.

### Preparation of a negative electrode

As a negative electrode, a commercially available graphite powder. (average particle diameter of 10µm) was used. This negative electrode material was mixed by a biaxial kneader with a copolymer of polyethylene oxide and polypropylene oxide added with LiBF₄ in an ethanol solvent. This mixture was coated on a copper sheet having thickness of 12µm which constituted a negative electrode collector and was dried at 120°C to produce a negative electrode in the form of a sheet. This negative electrode, had thickness of 40 µm.

### Assembly of a battery

The positive electrode, the solid electrolyte and the negative electrode were superposed one upon another, heated at 150°C; pressed by a roll press and cut into a sheet of 25 × 40mm. The thickness of the cell was 130µm. The cell was then dried under reduced pressure and sealed in laminate sheets attached with lead lines to assemble a battery The internal structure of this battery is shown in FIG. 1.

A charging-discharging measurement was made with respect to the assembled battery under conditions of a room temperature of 25°C, constant current of 0.2mA/cm², cut-off voltage of 4.2V for charging and 3.0V for discharging. Initial discharging capacity was 12.2mAh and discharging capacity after repeating of 20 cycles was 11.3mAh which was 92% of the initial discharging capacity.

### Example 6

The glass-ceramic fine powder slurry B was added to the positive electrode and the negative electrode respectively in an amount of 20 mass % on solid basis and a battery was assembled in the same manner as in Example 5 in other respects. The charging-discharging measurement was conducted in the same manner as in Example 5. Initial discharging capacity was 13.8mAh and discharging capacity after repeating of 20 cycles was 13.2mAh which was 96% of the initial discharging capacity.

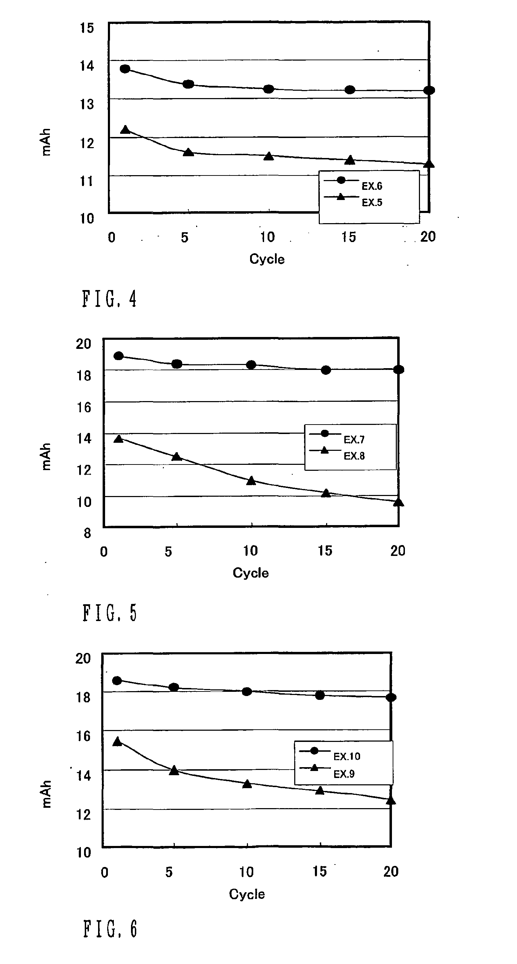

Change in the discharging capacity accompanying the charging-discharging cycles of the lithium ion conductive batteries of Examples 5 and 6 is shown in FIG. 4.

In the batteries of Examples 5 and 6, the initial discharging capacity is large and deterioration in the capacity accompanying the charging-discharging cycles is relatively small. Example 6 which used the lithium ion conductive glass-ceramic had a particularly excellent result.

### Example 7

### Preparation of a solid electrolyte

The glass-ceramic powder A made in Example 5 was mixed uniformly with a copolymer of polyethylene oxide and propylene oxide added with LiTFSI as a lithium salt at a ratio of 75 : 25 in an ethanol solvent. The mixture was coated on a PET film which had been pretreated for releasing and dried at a room temperature and further dried under reduced pressure at 120°C for removing the solvent by evaporation. Another PET film which had been pretreated for releasing was adhered to the solid electrolyte thus obtained. The composite electrolyte was then heated at 130°C and pressed by a roll press for removing bubbles remaining in the solid electrolyte. The PET films on both sides of the electrolyte were stripped off. The solid electrolyte thus obtained had thickness of 26µm.

### Preparation of a positive electrode

For producing a positive electrode compound, a commercially available flow-type granulating machine was used. A spray suspension was prepared by mixing, in an ethanol solvent, ketjenblack (average particle diameter of 40nm) as an electron conduction additive in an amount of 5 mass% on solid basis of the positive electrode active material, glass-ceramic fine powder slurry B as an ion conduction additive in an amount of 5 mass % on solid basis of the positive electrode active material and a copolymer of polyethylene oxide and a propylene oxide added with LiTFSI as a binder.

As an active material of the positive electrode, commercially available LiMn₂O₄ (average particle diameter of 10 µm) was used. This active material of the positive electrode was put in the flow-type granulating machine and the spray suspension prepared in the above described manner was sprayed over the positive electrode active material flowing at 90°C thereby to cause the ethanol, the solvent, to evaporate and cause the electron conduction additive and the ion conduction additive to fix to the surface of the particles of the active material. The positive electrode compound having the surface thereof covered with the conduction additives was lightly dispersed again by using ethanol and was coated uniformly on an aluminum sheet having thickness of 20 µm which constituted a positive electrode collector. The positive electrode material was dried at 120°C to produce a positive electrode. The positive electrode compound had thickness of 65 µm.

### Preparation of a negative electrode

For producing a negative electrode compound, the commercially available flow-type granulating machine used for producing the positive electrode compound was used.

A spray suspension was prepared by mixing, in an ethanol solvent, ketjenblack (average particle diameter of 40nm) as an electron conduction additive in an amount of 5 mass% on solid basis of the negative: electrode active material, glass-ceramic fine powder slurry B as an ion conduction additive in an amount of 5 mass % on solid basis of the negative electrode active material. and a copolymer of polyethylene oxide and a propylene oxide added with LiTFSI as a binder.

As the active material of the negative electrode, commercially available Li₄Ti₅O₁₂ was granulated to particles having an average particle diameter of 3 µm. This negative electrode active material was put in the flow-type granulating machine and the spray suspension prepared in the above described manner was sprayed over the negative electrode active material flowing at 90°C thereby to cause the ethanol, the solvent, to evaporate and cause the electron conduction additive and the ion conduction additive to fix to the surface of the particles of the active material. The negative electrode compound having the surface thereof covered with the conduction additives was lightly dispersed again by using ethanol and was coated uniformly on a copper sheet having thickness of 18 µm which constituted a negative electrode collector. The negative electrode material was dried at 120°C to produce a negative electrode. The negative electrode compound had thickness of 50 µm.

### Assembly of a battery

The positive electrode, the solid electrolyte and the negative electrode were superposed one upon another, heated at 150°C, pressed by a roll press and cut into a sheet of 25 × 40mm. The thickness of the cell was 175 µm. The cell was then dried under reduced pressure and sealed in laminate sheets attached with lead lines to assemble a battery

A charging-discharging measurement was made with respect to the assembled battery under conditions of a room temperature of 25°C, constant current of 0.2mA/cm², cut-off voltage of 3.5V for charging and 2.0V for discharging. Initial discharging capacity was 18.9mAh and discharging capacity after repeating of 20 cycles was 18.0mAh which was 95% of the initial discharging capacity.

### Example 8

The glass-ceramic fine powder A having an average particle diameter of 2 µm made in Example 5 was used as an ion conduction additive for the positive and negative electrode in an amount of 10 mass % and a battery was assembled in the same manner as in Example 7.

A charging-discharging measurement was made with respect to the assembled battery under conditions of a room temperature of 25°C, constant current of 0.2mA/cm², cut-off voltage of 3.5V for charging and 2.0V for discharging. Initial discharging capacity was 13.7mAh and discharging capacity after repeating of 20 cycles was 9.6mAh which was 70% of the initial discharging capacity.

Change in the discharging capacity accompanying the charging-discharging cycles of the lithium ion conductive batteries of Examples 7 and 8 is shown in FIG. 5.

In the batteries of Examples 7 and 8, the initial discharging capacity is large and deterioration in the capacity accompanying the charging-discharging cycles is relatively small. Example 7 which used the lithium ion conductive glass-ceramic having a particularly small average particle diameter had a particularly excellent result.

### Example 9

For producing the positive electrode compound, a commercially available spray dry machine was used. As an active material of the positive electrode, LiNi_{0.8}Co_{0.2}O₂ (average particle diameter of 3 µm), carbon nanofiber (average diameter of 80nm) as an electron conduction additive in an amount of 2 mass % of the positive electrode active material, SiO₂ fine powder having an average particle diameter of 50nm as an ion conduction additive in an amount of 4 mass % of the positive electrode active material, and a copolymer of polyethylene oxide and polypropylene oxide added with a LiTFSI as a binder were mixed together in a mixed solvent of methanol and ethanol to prepare a suspension. This suspension was sprayed and dried while being stirred by the spray dry machine and, by evaporating the solvent, the electron conduction additive and the ion conduction additive were fixed to the surface of particles of the active material. This positive electrode compound covered with the conduction additives was lightly dispersed by using an ethanol solvent and coated uniformly on an aluminum sheet having thickness of 20 µm which constituted a positive electrode collector. The composite material was then dried at 120°C to produce a positive electrode. The positive electrode compound had thickness of 45 µm.

### Preparation of a negative electrode

For producing the negative electrode compound, the same spray dry machine as used in preparation of the positive electrode compound was used. As an active material of the negative electrode, commercially available Li₄Ti₅O₁₂ - which was granulated to particles having an average particle diameter of 3 µm, carbon nanofiber (average diameter of 80nm) as an electron conduction additive in an amount of 2 mass % of the negative electrode active material, SiO₂ fine powder having an average particle diameter of 50nm as an ion conduction additive in an amount of 3 mass % of the negative electrode active material, and a copolymer of polyethylene oxide and polypropylene oxide added with a LiTFSI as a binder were mixed together in a mixed solvent of methanol and ethanol to prepare a suspension. This suspension was sprayed and dried while being stirred by the spray dry machine and, by evaporating the solvent, the electron conduction additive and the ion conduction additive were fixed to the surface of particles of the active material. This negative electrode compound covered with the conduction additives was lightly dispersed by using an ethanol solvent and coated uniformly on a copper sheet having thickness of 20 µm which constituted a negative electrode collector. The composite material was then dried at 120°C to produce a negative electrode. The negative electrode compound had thickness of 45 µm.

### Assembly of a battery

The positive electrode, the solid electrolyte made in Example 7 and the negative electrode were superposed one upon the another, heated at 150°C, pressed by a roll press and cut into a sheet of 25 × 40mm. The thickness of the cell was 175 µm. The cell was then dried under reduced pressure and sealed in laminate sheets attached with lead lines to assemble a battery

A charging-discharging measurement was made with respect to the assembled battery under conditions of a room temperature of 25°C, constant current of 0.2mA/cm², cut-off voltage of 3.5V for charging and 2.0V for discharging. Initial discharging capacity was 15.5mAh and discharging capacity after repeating of 20 cycles was 12.4mAh which was 80% of the initial discharging capacity.

### Example 10

A battery was produced in the same manner as in Example 9 except that, instead of SiO₂ fine powder used in Example 9, the glass-ceramic fine powder slurry B made in Example 5 was used as an ion conduction additive for the positive and negative electrodes in an amount of 4 mass % on solid basis of the positive electrode active material and in an amount of 3 mass % on solid basis of the negative electrode active material. A charging-discharging measurement was conducted under the same conditions as in Example 8. Initial discharging capacity was 18.6mAh and discharging capacity after repeating of 20 cycles was 17.7mAh which was 95% of the initial discharging capacity.

Change in the discharging capacity accompanying the charging-discharging cycles of the lithium ion conductive batteries of Examples 9 and 10 is shown in FIG. 6.

In the batteries of Examples 9 and 10, the initial discharging capacity is large and deterioration in the capacity accompanying the charging-discharging cycles is relatively small. Example 10 which used the lithium ion conductive glass-ceramic had a particularly excellent result.

### Comparative Example 6

A battery was produced in the same manner as in Example 9 except that, instead of the glass-ceramic powder A contained in the solid electrolyte of Example 9, LiI. which was a lithium ion conductive glass-ceramic and crushed to particles having an average particle diameter of 2 µm was used in the same amount. A charging-discharging measurement was conducted under the same conditions as in Example 9. Initial discharging capacity was 10.2mAh and discharging capacity after repeating of 20 cycles was 6.1mAh which was only about 60% of the initial discharging capacity.

As described in the foregoing, the lithium ion secondary battery of the present invention comprising a solid electrolyte comprising a lithium ion conductive glass-ceramic has a high output and an excellent charging-discharging characteristic. Moreover, since the lithium ion secondary battery of the present invention does not contain an organic electrolytic solution, a very safe battery can be achieved.

According to the present invention, by employing a polymer imparted with lithium ion conductivity as a binder used in the solid electrolyte and adopting a specific structure for the polymer, a lithium ion secondary battery having a high power and an excellent charging-discharging characteristic can be realized.

Further, the lithium ion secondary battery of the present invention comprising a lithium ion conductive glass-ceramic in the electrodes has realized a battery having a high power and an excellent charging-discharging characteristic notwithstanding that it is a fully solid battery containing no organic electrolytic solution.

### Industrial Applicability

The electrolyte of the present invention comprising an organic polymer and a lithium ion conductive glass-ceramic has high lithium ion conductivity and is electrochemically very stable and, therefore; it can be used not only for a lithium ion secondary battery but for a lithium primary battery, an electrochemical capacitor called a hybrid capacitor, a dye-sensitized solar cell, and other electrochemical elements using lithium ion as a charge transfer carrier. Some examples of such electrochemical elements will be described below.

By attaching a desired sensitive electrode to the electrolyte, the electrolyte can be used for various gas sensors and other detectors. For example, by using carbonate as an electrode, it can be used as a carbon dioxide gas sensor. By using nitrate as an electrode, it can be used as a NOₓ sensor. By using sulfate as an electrode, it can be used as a SOₓ sensor. By assembling the electrolyte in a electrolytic cell, it can be used as an electrolyte for decomposing and catching NOₓ and SOₓ in exhaust gas.

By attaching an inorganic or organic compound which is colored or changes its color by insertion or removal of lithium ion to the electrolyte, and attaching a transparent electrode such as ITO thereto, an electrochromic element can be composed whereby an electrochromic display of a small power consumption having a memory capacity can be provided.

Since the ion conduction path of the electrolyte of the present invention has an optimum size for passing lithium ion, it can pass lithium ion selectively when alkali ion other than lithium ion also exists. The electrolyte therefore can be used as a partition of a lithium ion selective collection device or a partition of a lithium ion selection electrode. Since the speed of passing of lithium ion is higher as the mass of the ion is smaller; the electrolyte can be used for separating isotope of lithium ion. This enables concentration and separation of 6Li concentrate (7.42% in the ratio existing in nature) which is necessary for a blanket material for producing tritium which is a fuel of a fusion reactor.

Since the lithium ion conductive glass-ceramic powder contained in the electrolyte and electrodes has high lithium ion conductivity and is electrochemically very stable, it can be utilized as additive for imparting ion conductivity, anti-static purposes and controlling surface potential etc. by mixing the glass-ceramic powder in other resins or coating materials.

## Claims

1. A solid electrolyte comprising powder of an inorganic substance comprising a lithium ion conductive crystal and an organic polymer added with an inorganic or organic lithium salt, **characterized in that** said organic polymer is selected from a group consisting of a copolymer and a bridge structure thereof, of polyethylene oxide and an organic polymer or polymers, selected from the group consisting of polypropylene oxide, polyolefins, polytetrafluoroethylene, polychlorotrifluoroethylene, polyvinylidene fluoride, polyacrylate, allylglycidyl ether and polymethacrylate, wherein said lithium ion conductive crystal having as a pre-dominat crystal phase a crystal phase of Li_{1+x+y}AlₓTi₂₋ₓSi_{y}P_{3-y}O₁₂ where x and y are 0≤x≤ and 0≤y≤1, and said solid electrolyte is free of an electrolytic solution.

2. A solid electrolyte as defined in claim 1 wherein the inorganic substance which constitutes the powder of the inorganic substance comprising the lithium ion conductive crystal is free of pores or a crystal grain boundary which impedes ion conduction.

3. A solid electrolyte as defined in claims 1 or 2 having thickness exceeding 20µm up to 60µm.

4. A solid electrolyte as defined in any of claims 1 to 3 wherein the powder of the inorganic substance comprising the lithium ion conductive crystal has ion conductivity of 10⁻⁴SCm⁻¹ or over and an average particle diameter of 9 µm or below and is contained in the solid electrolyte in an amount of 50 - 95 mass %.

5. A solid electrolyte as defined in any of claims 1 to 4 having ion conductivity of 10⁻⁵Scm⁻¹ or over.

6. A solid electrolyte as defined in any of claims 1 to 5 wherein the powder of the inorganic substance comprising the lithium ion conductive crystal has, as a predominant crystal phase, a crystal phase of Li_{1+x+y}AlₓTi₂₋ₓSi_{y}P_{3-y}O₁₂ where x and y are 0≤x≤1 and 0≤y≤1.

7. A solid electrolyte as defined in any of claims 1 to 6 wherein the powder of the inorganic substance comprising the lithium ion conductive crystal comprises, in mol %,
| | |
|---|---|
| Li₂O | 12 - 18% |
| Al₂O₃ + Ga₂O₃ | 5 - 10% |
| TiO₂ + GeO₂ | 35 - 45% |
| SiO₂ | 1 - 10% and |
| P₂O₅ | 30 - 40%. |

8. A solid electrolyte as defined in any of claims 1 to 6 wherein the powder of the inorganic substance comprising the lithium ion conductive crystal comprises, in mass %,
| | |
|---|---|
| Li₂O | 3 - 10% |
| Al₂O₃ + Ga₂O₃ | 5 - 20% |
| TiO₂ + GeO₂ | 25 - 40% |
| SiO₂ | 0.5 - 8% and |
| P₂O₅ | 40 - 55%. |

9. A solid electrolyte as defined in any of claims 1 to 8 wherein the polymer added with the inorganic or organic lithium salt has ion conductivity of 10⁻⁸Scm⁻¹ and is contained in the solid electrolyte in an amount of 5 - 40 mass %.

10. A solid electrolyte as defined in any of claims 1 to 9, wherein the inorganic substance is a lithium ion conductive glass-ceramic.

11. A lithium ion secondary battery comprising a solid electrolyte as defined in any of claims 1 to 10.

12. A lithium ion secondary battery as defined in claim 11 comprising an inorganic substance comprising a lithium ion conductive crystal in a positive electrode and/or a negative electrode.

13. A lithium ion secondary battery as defined in claim 12 wherein the inorganic substance comprising the lithium ion conductive crystal contained in the positive electrode and/or the negative electrode is free of pores or a crystal grain boundary which impedes ion conduction.

14. A lithium ion secondary battery as defined in claim 12 or 13 wherein the inorganic substance comprising the lithium ion conductive crystal contained in the positive electrode and/or the negative electrode is a lithium ion conductive glass-ceramic.

15. A lithium ion secondary battery as defined in any of claims 12 to 14 wherein the inorganic substance comprising the lithium ion conductive crystal contained in the positive electrode and/or the negative electrode has a particle diameter which is one-fifth or below of the particle diameter of an active material of the positive electrode and/or the negative electrode.

16. A lithium ion secondary battery as defined in any of claims 12 to 15 wherein the inorganic substance comprising the lithium ion conductive crystal contained in the positive electrode and/or the negative electrode is contained in an amount of 2 - 35 mass % of the active material of the positive electrode and/or the negative electrode comprising the inorganic substance.

17. A lithium ion secondary battery as defined in any of claims 12 to 16 wherein the inorganic substance contained in the positive electrode and/or the negative electrode comprising the lithium ion conductive crystal comprises, in mol %,
| | |
|---|---|
| Li₂O | 12 - 18% |
| Al₂O₃ + Ga₂O₃ | 5 - 10% |
| TiO₂ + GeO₂ | 35 - 45% |
| SiO₂ | 1 - 10% and |
| P₂O₅ | 30 - 40%. |

18. A lithium ion secondary battery as defined in any of claims 12 to 16 wherein the inorganic substance contained in the positive electrode and/or the negative electrode comprising the lithium ion conductive crystal comprises, in mass %,
| | |
|---|---|
| Li₂O | 3 - 10% |
| Al₂O₃ + Ga₂O₃ | 5 - 20% |
| TiO₂ + GeO₂ | 25 - 40% |
| SiO₂ | 0.5 - 8% and |
| P₂O₅ | 40 - 55%. |

19. A lithium ion secondary battery as defined in any of claims 12 to 18 wherein the inorganic substance contained in the positive electrode and/or the negative electrode comprising the lithium ion conductive crystal has, as a predominant crystal phase, a crystal phase of Li_{1+x+y}AlₓTi₂₋ₓSi_{y}P_{3-y}O₁₂ where x and y are 0≤x≤1 and 0≤y≤1.

20. A lithium ion secondary battery as defined in claim 11 comprising, in the positive electrode and the negative electrode, the same glass-ceramic and organic polymer as those contained in the solid electrolyte.

## Patentansprüche

1. Fester Elektrolyt, umfassend ein Pulver aus einer anorganischen Substanz, die einen lithiumionenleitenden Kristall umfasst, und ein mit einem anorganischen oder organischen Lithiumsalz versetztes organisches Polymer, **dadurch gekennzeichnet, dass** das organische Polymer aus einer Gruppe ausgewählt ist, die aus einem Copolymer von Polyethylenoxid und einem oder mehreren organischen Polymeren und einer Brückenstruktur davon besteht, wobei die organischen Polymere aus der Gruppe ausgewählt sind, die aus Polypropylenoxid, Polyolefinen, Polytetrafluorethylen, Polychlortrifluorethylen, Polyvinylidenfluorid, Polyacrylat, Allylglycidylether und Polymethacrylat besteht, wobei der lithiumionenleitende Kristall als vorherrschende Kristallphase eine Kristallphase von Li_{1+x+y}AlₓTi₂₋ₓSi_{y}P_{3-y}O₁₂ aufweist, wobei für x und y die Beziehungen 0 ≤ x ≤ 1 und 0 ≤ y ≤ 1 gelten und der feste Elektrolyt frei von einer Elektrolytlösung ist.

2. Fester Elektrolyt gemäß Anspruch 1, wobei die anorganische Substanz, die das Pulver aus der anorganischen Substanz, die den lithiumionenleitenden Kristall umfasst, bildet, frei von Poren oder einer Kristallkorngrenze, die die Ionenleitung behindert, ist.

3. Fester Elektrolyt gemäß Anspruch 1 oder 2, die eine Dicke von über 20 µm und bis zu 60 µm aufweist.

4. Fester Elektrolyt gemäß einem der Ansprüche 1 bis 3, wobei das Pulver aus der anorganischen Substanz, die den lithiumionenleitenden Kristall umfasst, eine Ionenleitfähigkeit von 10⁻⁴ S·cm⁻¹ oder darüber und einen mittleren Teilchendurchmesser von 9 µm oder darunter aufweist und in dem festen Elektrolyten in einer Menge von 50 bis 95 Massenprozent enthalten ist.

5. Fester Elektrolyt gemäß einem der Ansprüche 1 bis 4, der eine Ionenleitfähigkeit von 10⁻⁵ S·cm⁻¹ oder darüber aufweist.

6. Fester Elektrolyt gemäß einem der Ansprüche 1 bis 5, wobei das Pulver aus der anorganischen Substanz, die den lithiumionenleitenden Kristall umfasst, als vorherrschende Kristallphase eine Kristallphase von Li_{1+x+y}AlₓTi₂₋ₓSi_{y}P_{3-y}O₁₂ aufweist, wobei für x und y die Beziehungen 0 ≤ x ≤ 1 und 0 ≤ y ≤ 1 gelten.

7. Fester Elektrolyt gemäß einem der Ansprüche 1 bis 6, wobei das Pulver aus der anorganischen Substanz, die den lithiumionenleitenden Kristall umfasst, folgende Bestandteile in Mol-% umfasst:
| | |
|---|---|
| Li₂O | 12-18% |
| Al₂O₃ + Ga₂O₃ | 5-10% |
| TiO₂ + GeO₂ | 35-45% |
| SiO₂ | 1-10% und |
| P₂O₅ | 30-40%. |

8. Fester Elektrolyt gemäß einem der Ansprüche 1 bis 6, wobei das Pulver aus der anorganischen Substanz, die den lithiumionenleitenden Kristall umfasst, folgende Bestandteile in Massen-% umfasst:
| | |
|---|---|
| Li₂O | 3-10% |
| Al₂O₃ + Ga₂O₃ | 5-20% |
| TiO₂ + GeO₂ | 25-40% |
| SiO₂ | 0,5-8% und |
| P₂O₅ | 40-55%. |

9. Fester Elektrolyt gemäß einem der Ansprüche 1 bis 8, wobei das mit dem anorganischen oder organischen Lithiumsalz versetzte Polymer eine Ionenleitfähigkeit von 10⁻⁸ S·cm⁻¹ aufweist und in dem festen Elektrolyten in einer Menge von 5 bis 40 Massenprozent enthalten ist.

10. Fester Elektrolyt gemäß einem der Ansprüche 1 bis 9, wobei die anorganische Substanz eine lithiumionenleitende Glaskeramik ist.

11. Lithiumionen-Sekundärbatterie, die einen festen Elektrolyten gemäß einem der Ansprüche 1 bis 10 umfasst.

12. Lithiumionen-Sekundärbatterie gemäß Anspruch 11, die eine anorganische Substanz, welche einen lithiumionenleitenden Kristall umfasst, in einer positiven Elektrode und/oder einer negativen Elektrode umfasst.

13. Lithiumionen-Sekundärbatterie gemäß Anspruch 12, wobei die in der positiven Elektrode und/oder der negativen Elektrode enthaltene anorganische Substanz, die den lithiumionenleitenden Kristall umfasst, frei von Poren oder einer Kristallkorngrenze, die die Ionenleitung behindert, ist.

14. Lithiumionen-Sekundärbatterie gemäß Anspruch 12 oder 13, wobei die in der positiven Elektrode und/oder der negativen Elektrode enthaltene anorganische Substanz, die den lithiumionenleitenden Kristall umfasst, eine lithiumionenleitende Glaskeramik ist.

15. Lithiumionen-Sekundärbatterie gemäß einem der Ansprüche 12 bis 14, wobei die in der positiven Elektrode und/oder der negativen Elektrode enthaltene anorganische Substanz, die den lithiumionenleitenden Kristall umfasst, einen Teilchendurchmesser aufweist, der ein Fünftel oder weniger des Teilchendurchmessers eines aktiven Materials der positiven Elektrode und/oder der negativen Elektrode beträgt.

16. Lithiumionen-Sekundärbatterie gemäß einem der Ansprüche 12 bis 15, wobei die in der positiven Elektrode und/oder der negativen Elektrode enthaltene anorganische Substanz, die den lithiumionenleitenden Kristall umfasst, in einer Menge von 2 bis 35 Massenprozent des aktiven Materials der positiven Elektrode und/oder der negativen Elektrode, die die anorganische Substanz umfasst, enthalten ist.

17. Lithiumionen-Sekundärbatterie gemäß einem der Ansprüche 12 bis 16, wobei die in der positiven Elektrode und/oder der negativen Elektrode enthaltene anorganische Substanz, die den lithiumionenleitenden Kristall umfasst, folgende Bestandteile in Mol-% umfasst:
| | |
|---|---|
| Li₂O | 12-18% |
| Al₂O₃ + Ga₂O₃ | 5-10% |
| TiO₂ + GeO₂ | 35-45% |
| SiO₂ | 1-10% und |
| P₂O₅ | 30-40%. |

18. Lithiumionen-Sekundärbatterie gemäß einem der Ansprüche 12 bis 16, wobei die in der positiven Elektrode und/oder der negativen Elektrode enthaltene anorganische Substanz, die den lithiumionenleitenden Kristall umfasst, folgende Bestandteile in Massen-% umfasst:
| | |
|---|---|
| Li₂O | 3-10% |
| Al₂O₃ + Ga₂O₃ | 5-20% |
| TiO₂ + GeO₂ | 25-40% |
| SiO₂ | 0,5-8% und |
| P₂O₅ | 40-55%. |

19. Lithiumionen-Sekundärbatterie gemäß einem der Ansprüche 12 bis 18, wobei die in der positiven Elektrode und/oder der negativen Elektrode enthaltene anorganische Substanz, die den lithiumionenleitenden Kristall umfasst, als vorherrschende Kristallphase eine Kristallphase von Li_{1+x+y}AlₓTi₂₋ₓSi_{y}P_{3-y}O₁₂ aufweist, wobei für x und y die Beziehungen 0 ≤ x ≤ 1 und 0 ≤ y ≤ 1 gelten.

20. Lithiumionen-Sekundärbatterie gemäß Anspruch 11, die in der positiven Elektrode und der negativen Elektrode dieselbe Glaskeramik und dasselbe organische Polymer umfasst, wie sie in dem festen Elektrolyten enthalten sind.

## Revendications

1. Electrolyte solide comprenant une poudre d'une substance inorganique comprenant un cristal conducteur d'ions lithium et un polymère organique dopé avec un sel de lithium inorganique ou organique, **caractérisé en ce que** ledit polymère organique est choisi dans le groupe consistant en un copolymère et sa structure de pont dérivé d'oxyde de polyéthylène et d'un ou plusieurs polymères organiques choisis dans le groupe consistant en oxyde de polypropylène, polyoléfines, polytétratluoroéthylène, polychlorotrifluoroéthylène, fluorure de polyvinylidène, polyacrylate, éther allylglycidique et polyméthacrylate, ledit cristal conducteur d'ions lithium ayant comme phase cristalline principale une phase cristalline de Li_{1+x+y}AlₓTi₂₋ₓSi_{y}P_{3-y}O₁₂, où x et y satisfont les relations 0 ≤ x ≤ 1 et 0 ≤ y ≤ 1, et ledit électrolyte solide est exempt d'une solution électrolytique.

2. Electrolyte solide selon la revendication 1, dans lequel la substance inorganique constituant la poudre de la substance inorganique comprenant le cristal conducteur d'ions lithium est exempte de pores et joints de grain cristallin entravant la conduction ionique.

3. Electrolyte solide selon les revendications 1 ou 2, ayant une épaisseur supérieure à 20 µm et jusqu'à 60 µm.

4. Electrolyte solide selon l'une quelconque des revendications 1 à 3, dans lequel la poudre de la substance inorganique comprenant le cristal conducteur d'ions lithium a une conductivité ionique d'au moins 10⁻⁴ S·cm⁻¹ et une granulométrie moyenne d'au plus 9 µm et est contenue dans l'électrolyte solide en une quantité de 50 à 95 pour cent massique.

5. Electrolyte solide selon l'une quelconque des revendications 1 à 4, ayant une conductivité ionique d'au moins 10⁻⁵ S·cm⁻¹.

6. Electrolyte solide selon l'une quelconque des revendications 1 à 5, dans lequel la poudre de la substance inorganique comprenant le cristal conducteur d'ions lithium a comme phase cristalline principale une phase cristalline de Li_{1+x+y}AlₓTi₂₋ₓSi_{y}P_{3-y}O₁₂, où x et y satisfont les relations 0 ≤ x ≤ 1 et 0 ≤ y ≤ 1.

7. Electrolyte solide selon l'une quelconque des revendications 1 à 6, dans lequel la poudre de la substance inorganique comprenant le cristal conducteur d'ions lithium comprend, en pour cent molaire :
| | |
|---|---|
| Li₂O | 12-18% |
| Al₂O₃ + Ga₂O₃ | 5-10 % |
| TiO₂ + GeO₂ | 35-45 % |
| SiO₂ | 1-10% et |
| P₂O₅ | 30-40 %. |

8. Electrolyte solide selon l'une quelconque des revendications 1 à 6, dans lequel la poudre de la substance inorganique comprenant le cristal conducteur d'ions lithium comprend, en pour cent massique :
| | |
|---|---|
| Li₂O | 3-10 % |
| Al₂O₃ + Ga₂O₃ | 5-20 % |
| TiO₂ + GeO₂ | 25-40 % |
| SiO₂ | 0,5-8 % et |
| P₂O₅ | 40-55%. |

9. Electrolyte solide selon l'une quelconque des revendications 1 à 8, dans lequel le polymère dopé avec un sel de lithium inorganique ou organique a une conductivité ionique de 10⁻⁸ S·cm-1 et est contenu dans l'électrolyte solide en une quantité de 5 à 40 pour cent massique.

10. Electrolyte solide selon l'une quelconque des revendications 1 à 9, dans lequel la substance inorganique est une céramique vitreuse conductrice d'ions lithium.

11. Batterie secondaire aux ions lithium comprenant un électrolyte solide selon l'une quelconque des revendications 1 à 10.

12. Batterie secondaire aux ions lithium selon la revendication 11, comprenant une substance inorganique comprenant un cristal conducteur d'ions lithium dans une électrode positive et/ou une électrode négative.

13. Batterie secondaire aux ions lithium selon la revendication 12, dans laquelle la substance inorganique comprenant le cristal conducteur d'ions lithium contenue dans l'électrode positive et/ou l'électrode négative est exempte de pores et joints de grain cristallin entravant la conduction ionique.

14. Batterie secondaire aux ions lithium selon la revendication 12 ou 13, dans laquelle la substance inorganique comprenant le cristal conducteur d'ions lithium contenue dans l'électrode positive et/ou l'électrode négative est une céramique vitreuse conductrice d'ions lithium.

15. Batterie secondaire aux ions lithium selon l'une quelconque des revendications 12 à 14, dans laquelle la substance inorganique comprenant le cristal conducteur d'ions lithium contenue dans l'électrode positive et/ou l'électrode négative a une granulométrie qui est au plus un cinquième de la granulométrie d'un matériau actif de l'électrode positive et/ou de l'électrode négative.

16. Batterie secondaire aux ions lithium selon l'une quelconque des revendications 12 à 15, dans laquelle la substance inorganique comprenant le cristal conducteur d'ions lithium contenue dans l'électrode positive et/ou l'électrode négative est contenue en une quantité de 2 à 35 pour cent massique du matériau actif de l'électrode positive et/ou de l'électrode négative comprenant la substance inorganique.

17. Batterie secondaire aux ions lithium selon l'une quelconque des revendications 12 à 16, dans laquelle la substance inorganique comprenant le cristal conducteur d'ions lithium contenue dans l'électrode positive et/ou l'électrode négative comprend, en pour cent molaire :
| | |
|---|---|
| Li₂O | 12-18 % |
| Al₂O₃ + Ga₂O₃ | 5-10 % |
| TiO₂ + GeO₂ | 35-45 % |
| SiO₂ | 1-10 % et |
| P₂O₅ | 30-40 %. |

18. Batterie secondaire aux ions lithium selon l'une quelconque des revendications 12 à 16, dans laquelle la substance inorganique comprenant le cristal conducteur d'ions lithium contenue dans l'électrode positive et/ou l'électrode négative comprend, en pour cent massique ;
| | |
|---|---|
| Li₂O | 3-10 % |
| Al₂O₃ + Ga₂O₃ | 5-20 % |
| TiO₂ + GeO₂ | 25-40 % |
| SiO₂ | 0,5-8 % et |
| P₂O₅ | 40-55 %. |

19. Batterie secondaire aux ions lithium selon l'une quelconque des revendications 12 à 18, dans laquelle la substance inorganique comprenant le cristal conducteur d'ions lithium contenue dans l'électrode positive et/ou l'électrode négative a comme phase cristalline principale une phase cristalline de Li_{1+x+y}AlₓTi₂₋ₓSi_{y}P_{3-y}O₁₂, où x et y satisfont les relations 0 ≤ x ≤ 1 et 0 ≤ y ≤ 1.

20. Batterie secondaire aux ions lithium selon la revendication 11, comprenant, dans l'électrode positive et/ou dans l'électrode négative, la même céramique vitreuse et le même polymère organique que ceux contenus dans l'électrolyte solide.
